(19) Europäisches Patentamt
European Patent Office
Office européen des brevets

(11) **EP 1 811 633 A1**

(12) **EUROPÄISCHE PATENTANMELDUNG**

(43) Veröffentlichungstag:
**25.07.2007 Patentblatt 2007/30**

(51) Int Cl.:
*H02K 3/40* (2006.01)

(21) Anmeldenummer: **07100656.3**

(22) Anmeldetag: **17.01.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **24.01.2006 CH 1082006**

(71) Anmelder: **Alstom Technology Ltd**
**5400 Baden (CH)**

(72) Erfinder: **Baumann, Thomas**
**5430 Wettingen (CH)**

(54) **Statorwicklung einer rotierenden elektrischen Maschine sowie ein Verfahren zur Herstellung einer solchen Statorwicklung**

(57) Eine Statorwicklung (10) einer rotierenden elektrischen Maschine, insbesondere mit Betriebsspannungen oberhalb 6 kV, ist mit Formspulen oder Stabwicklungen ausgestattet, wobei die einzelnen Leiter der Formspulen bzw. Stabwicklungen im Bereich des Statorkörpers in Nuten eingelegt und ausserhalb des Statorkörpers in einem Wickelkopfbereich miteinander verbunden sind, und wobei die Leiter (14) von einer Hauptisolierung (15) und einem darüberliegenden Glimmschutz (16) umgeben sind.

Bei einer solchen Statorwicklung wird unter Beibehaltung der Geometrie des Wickelkopfes ein Maschinen- bzw. Generatorbetrieb bei höheren Temperaturen oder grösseren Höhen als ursprünglich geplant dadurch ermöglicht, dass bei den Leitern (14) im Wickelkopfbereich zusätzliche Mittel (17) zur Verbesserung der Glimmbeständigkeit vorgesehen sind.

*Fig.3*

EP 1 811 633 A1

**Beschreibung**

TECHNISCHES GEBIET

Die vorliegende Erfindung bezieht sich auf das Gebiet der elektrischen Maschinen. Sie betrifft eine Statorwicklung einer rotierenden elektrischen Maschine gemäss dem Oberbegriff des Anspruchs 1 sowie ein Verfahren zur Herstellung einer solchen Statorwicklung. Die Statorwicklung kann dabei mit Formspulen oder Stabwicklungen ausgestattet sein. Nachfolgend wird nur der Fall der Stabwicklung betrachtet; die Erfindung ist aber nicht auf Stabwicklungen beschränkt.

STAND DER TECHNIK

Eine Stabwicklung des Stators einer rotierenden elektrischen Maschine besteht meist aus sog. Roebelstäben, welche im sog. Wickelkopfbereich ausserhalb des Bereiches des Statorkörpers miteinander verbunden sind, um so die sog. Wicklungen zu bilden. Üblicherweise sind es 6 Wicklungen, die zu je 2 parallel verbunden sind und so die elektrischen Phasen U, V, W repräsentieren. Zwischen benachbarten Stäben verschiedener Phasen kann (in der sog. Phasentrennung) annähernd die volle Nennspannung ($U_n$) anliegen.

Es geht bei der Erfindung um das Problem von Glimmentladungen, die zwischen den Stäben in der Phasentrennung im Wickelkopf (also ausserhalb des Statoreisenkörpers) auftreten und Schädigungen verursachen können. Die Schädigung tritt auf in Form von Erosion (Sputtereffekt), für die speziell Polymere anfällig sind.

Der Fall einer Glimmentladung kann auftreten, wenn eine elektrische rotierende Maschine, welche bisher ohne Entladung lief, bei höheren Temperaturen eingesetzt wird. Mit steigender Temperatur nimmt die Dichte der Luft oder eines anderen Gases, mit dem der Generator geflutet ist, und somit auch die Einsatzspannung für Glimmentladung (bei festem Abstand der Stäbe) ab. Die höheren Temperaturen sind auch in weiterer Hinsicht schädlich, da sie den halbleitenden Absteuerlack, mit dem die Leiterstäbe im Wickelkopfbereich überzogen sind, schädigen und somit seiner Funktion berauben können.

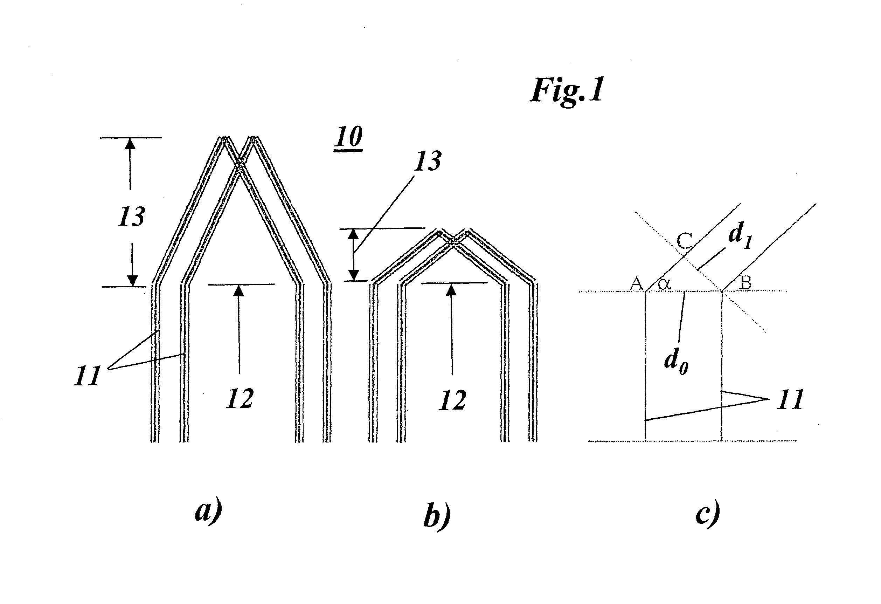

Wie aus der Fig. 1 zu entnehmen ist, liegen im Statorkörper die Wicklungsstäbe bzw. Roebelstäbe 11 in Nuten (Nutteil 12) und haben einen gewissen Abstand $d_0$ zueinander (Fig. 1 c). Zur Verbindung der Stäbe 11 im Wickelkopf (Wickelkopfteil 13) müssen die Stäbe ausserhalb der Nut seitlich und hochkant gebogen werden. Die Hochkantbiegung dient dazu, die Stäbe auf einen (gedachten) Kegelmantel zu bringen. Der seitliche Biegewinkel $\alpha$ (Fig. 1c) bestimmt einerseits den Abstand ($d_1$) der Stäbe im Wickelkopf und andererseits die Längenausladung des Wickelkopfes. Die Ausladung des Wickelkopfes sollte möglichst gering sein, um mechanische Schwingungen zu minimieren und die Maschine kompakt zu halten. Wie das Schema in Fig. 1 aber zeigt, bewirkt eine starke Biegung, dass die Stäbe 11 im Wickelkopf sehr dicht zueinander kommen.

Es sei AB =$d_0$ = Abstand der Stäbe im Statorkörper, BC = $d_1$ = Abstand der Stäbe im Wickelkopf und $\alpha$ der Biegewinkel. Dann ergibt sich im vereinfachten 2-dimensionalen Modell:

$$d_1 = d_0 \cdot \sin(90 - \alpha) = d_0 \cdot \cos\alpha$$

Bei der Festlegung von $\alpha$ darf aus elektrischen Gründen $d_1$ nicht zu klein gewählt werden, da es bei einem zu geringen parallelen Abstand benachbarter Stäbe zu Entladungen zwischen den Stäben kommen kann. Dies betrifft in erster Linie die Stäbe in der Phasentrennung, wo ein Stab das volle Potential einer Phase hat und sein Nachbar fast das volle Potential einer anderen Phase.

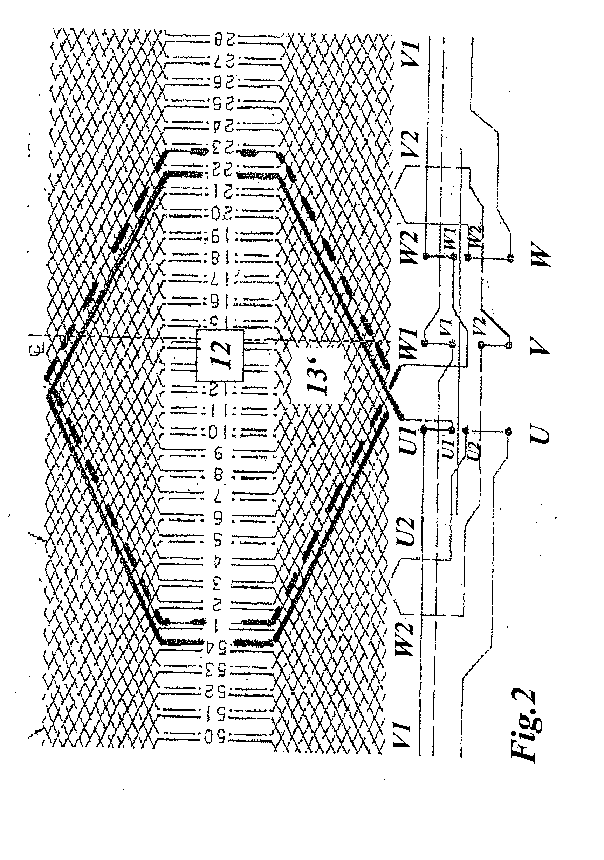

Dies sei anhand von Fig. 2 beispielhaft für einen Turbogenerator mit 54 Nuten und 2 Roebelstäben (Grundstab und Bohrungsstab) pro Nut erklärt. Der Generator sei 3-phasig mit den Phasen U, V, W. Der Generator ist so gewickelt, das jede Phase 2 mal vorkommt und im Wickelkopfraum 13' gleichartige Phasen parallel geschaltet sind. An den Phasenabgriffen U1,V1,W1 und U2, V2,W2 liegt jeweils die maximale Spannung. Wie im Fig. 2 zu sehen ist, befindet sich rechts des Stabes von U1 (Nut 22) in Nut 23 ein Stab, der annähernd die volle Spannung von W1 trägt.

Somit liegt zwischen den beiden Stäben von Nut 22 und Nut 23 annähernd die volle Nennspannung $U_n$. Dasselbe gilt natürlich für alle anderen Phasentrennungen.

Es ist also bei der Auslegung des Wickelkopfes zu berücksichtigen, dass bei gegebener Nennspannung und Gasart gewisse Minimalabstände eingehalten werden, um einen Betrieb des Generators ohne Entladungen zu garantieren. Bei luftgekühlten Generatoren unter Normdruck ist ein typischer Wert für den Minimalabstand bei $U_n$ = 20 kV etwa 10-12 mm, was unter Berücksichtigung von Fertigungstoleranzen zu $d_1$=15 mm führt.

Trotzdem können Probleme auftauchen, wenn ein luftgekühlter Generator in grösserer Höhe oder bei höheren Temperaturen betrieben wird. Unter beiden Umständen ist die Dichte der Luft geringer, wobei die Durchschlagsfestigkeit von der Dichte linear abhängt. Der ursprünglich für niedrigere Höhen oder tiefere Temperaturen festgelegte Abstand $d_1$ reicht dann u.U. nicht mehr aus. Da die Dichte von Gasen proportional zur absoluten Temperatur ist, verlangt z.B. eine Temperaturerhöhung von 130°C auf 180°C einen Abstand von $d_1$ = ca.17 mm statt 15 mm.

Ein Betrieb des Generators mit Entladungen zwischen den Stäben ist speziell bei höheren Temperaturen nicht ratsam: Entladungen führen zu Oberflächenerosion, welche je nach Material unterschiedlich starke Schädigungen zur Folge haben kann. Typischerweise sind Materialien mit geringer thermischer Stabilität (z.B. Kunststoffe) auch weniger resistent gegen Erosion durch Glimmentladungen als Materialien hoher thermische Stabilität (z.B. hochschmelzende Silikate oder Oxidkeramik). Die Epoxydharze, wie sie an vielen Stellen im Generator in Isolation und Schutzlacken verwendet werden, kommen oberhalb 150° C in den Grenzbereich der Dauerstabilität. Ein derartig thermisch belastetes Harz ist dann z.B. bei 150°C viel weniger resistent gegenüber Entladungen als bei 100°C und zersetzt sich schnell.

Eine besondere Gefährdung geht dann von der Zersetzung des elektrisch halbleitenden Glimmschutzlackes aus: Einerseits geht seine Funktion verloren, Oberflächenentladungen in axialer Richtungen zu verhindern, andererseits wird sein elektrisch aktiver Füllstoff, üblicherweise sehr abrasive Siliziumkarbid-Körner, von der Staboberfläche abfallen und kann sich durch die Kühlluft im gesamten Generator verteilen.

Ein offensichtliches Mittel, um die Entladung zu verhindern, ist eine Erhöhung des Abstandes $d_1$. Das hat aber den Nachteil, dass der Wickelkopf länger wird. Ist z.B. die Auslenkung des Wickelkopfes 1500 mm bei $d_1$ = 15 mm und $\alpha$ = 60°, so wird sie bei $d_1$ = 17 mm ca. 1700 mm betragen. Das bedeutet, dass der Generator gesamthaft um fast 1/2 m länger wird und der Wickelkopf möglicherweise wesentlich höhere Schwingungsamplituden hat (Die Stäbe werden durch die Lorenzkraft B x E zu mechanischen Schwingungen von 2 x f (AC) = 100 Hz oder 120Hz angeregt).

Weitere Massnahmen zur Verhinderung von Entladungen bestehen darin, den Generator unter Luft-Überdruck (geschlossenes System) zu betreiben oder durch Beimischung des sehr durchschlagresistenten Gases $SF_6$ zur Luft (offenes System). Beide Massnahmen sind wirtschaftlich uninteressant. Bei $SF_6$ im offenen System kommt das Umweltproblem der permanenten $SF_6$-Leckage hinzu.

## DARSTELLUNG DER ERFINDUNG

Es ist Aufgabe der Erfindung, eine Statorwicklung zu schaffen, welche unter Beibehaltung der Geometrie des Wickelkopfes einen Maschinen- bzw. Generatorbetrieb bei höheren Temperaturen oder grösseren Höhen als ursprünglich geplant ohne Schädigung durch Gasentladungen im Wickelkopfraum ermöglicht, sowie ein Verfahren zur Herstellung einer solchen Statorwicklung anzugeben.

Die Aufgabe wird durch die Gesamtheit der Merkmale der Ansprüche 1 und 6 bzw. 8 gelöst. Ein zentraler Punkt der Erfindung besteht darin, bei den Leitern der Statorwicklung im Wickelkopfbereich zusätzliche Mittel zur Verbesserung der Glimmbeständigkeit vorzusehen.

Gemäss einer Ausgestaltung der Erfindung umfassen die zusätzlichen Mittel zur Verbesserung der Glimmbeständigkeit eine zusätzliche Decklage, welche auf den Glimmschutz aussen aufgebracht ist, wobei die Decklage insbesondere ein mit einem Epoxydharz imprägniertes Glimmerband mit einem Träger aus Glas oder Kunststoff umfasst, und der Leiter mit dem Glimmerband halb-überlappend umwickelt ist.

Gemäss einer Weiterbildung der Erfindung umfasst das Glimmerband der Decklage ein Glasseidegewebe, auf das dünne Glimmerplättchen in einer Vielzahl von Lagen aufgebracht sind, wobei die Plättchen parallel zur Bandebene orientiert sind.

Insbesondere überwiegt dabei der Mengenanteil an Glimmer im imprägnierten Glimmerband und ist vorzugsweise grösser 70%.

Eine Ausgestaltung des einen erfindungsgemässen Verfahrens ist dadurch gekennzeichnet, dass die zusätzlichen Mittel zur Verbesserung der Glimmbeständigkeit bzw. die Decklage ein Glimmerband mit einem Träger aus Glas oder Kunststoff umfassen, und dass das aufgebrachte Glimmerband gemeinsam mit Hauptisolierung und Glimmschutz durch eine Imprägnierung mit einem Kunstharz, insbesondere Epoxydharz, und einer anschliessenden Aushärtung des Harzes mit der Unterlage dauerhaft verbunden wird.

Eine Ausgestaltung des anderen erfindungsgemässen Verfahrens ist dadurch gekennzeichnet, dass die zusätzlichen Mittel zur Verbesserung der Glimmbeständigkeit bzw. die Decklage ein Glimmerband mit einem Träger aus Glas oder Kunststoff umfassen, und dass das Glimmerband nach Imprägnierung und Aushärtung des Glimmschutzes über den Glimmschutz gewickelt und anschliessend verklebt wird.

## KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1   in einer schematischen Darstellung die Verbindung zweier Roebelstäbe mit geringer (Fig. 1a) und starker Biegung (Fig. 1 b) der Stäbe; die Teilfigur 1c dient zum Verständnis des im Text abgeleiteten Zusammenhangs zwischen dem Abstand zweier paralleler Stäbe im Nutteil und im Wickelkopfbereich der Stäbe;

Fig. 2   einen Ausschnitt aus dem Wickelschema eines 3-phasigen Generators mit 2 parallelen Kreisen (der Nutteil ist stark verkürzt dargestellt; im unten dargestellten Wickelkopfraum (13') befinden sich die elektrischen Ableitungen Phasen U, V, W; mit dicker durchgezogener (gestrichelter) Linie ist der letzte Durchgang der Stäbe in Phase W2 (V2) dargestellt; im Bereich (13') liegt zwischen den Phase W2 und V2 annähernd die volle verkettete Spannung, $U_n$);

Fig. 3   in einem einseitigen Ausschnitt den Aufbau von Isolation, Glimmschutz und Decklage der Roebelstäbe im Wickelkopfbereich gemäss einem bevorzugten Ausführungsbeispiel der Erfindung; und

Fig. 4 eine rasterelektronenmikroskopische Aufnahme der Hauptisolierung eines Roebelstabes nach Fig. 3, bestehend aus mehreren Lagen von Glas-Glimmerbändern (Glimmerlage 18, Glaslage 19, Epoxydharz 20).

WEGE ZUR AUSFÜHRUNG DER ERFINDUNG

Wie oben gezeigt, sind bei gegebener Spannung die Wege zur Unterbindung der Entladung aus sehr grundlegenden physikalischen Prinzipien auf eine Erhöhung des Abstandes $d_1$ zwischen benachbarten Stäben oder eine Verbesserung der Durchschlagsfestigkeit des Gases beschränkt. Weitere Möglichkeiten gibt es nicht. Da diese Wege zur Realisierung wenig attraktiv und aufwändig sind, kann der Lösungsweg der Erfindung nicht in der Unterbindung der Entladung liegen, sondern es muss ein Weg gefunden werden, wie bei den polymeren Bestandteilen trotz Entladungen Schädigung verhindert werden kann.

Es geht bei der Erfindung um eine besondere Ausführung der Staboberflächen, welche es erlaubt, die Maschine auch in Gegenwart von Glimmentladungen zwischen den Stäben in der Phasentrennung ohne Schädigung zu betreiben.

Erfindungsgemäss wird die Aufgabe einer glimm- und temperaturbeständigen Oberfläche der Leiterstäbe im Wickelkopf dadurch gelöst, dass zusätzliche Mittel zur Verbesserung der Glimmbeständigkeit vorgesehen werden. Insbesondere wird der Glimmschutz mit einer Lage Glimmerband mit einem Träger aus Glas (GlasGlimmerband) überzogen. Glimmer ist weitestgehend beständig gegen Entladungen und schützt somit das Leitband gegen Schädigung und Erosion. Weiterhin haben die Glimmerlagen einen Barriereeffekt gegen die thermische Oxidation der polymeren Bestandteile. Thermische Oxidation bewirkt einen Masseverlust (Schrumpf) des Kunstharzbinders im Glimmschutzband, wodurch die elektrisch aktiven Füllkörner besseren Kontakt zueinander finden. So kann der Masseverlust zu einer starken Abnahme des elektrischen Widerstandes des Glimmschutzbandes führen. Mit Glimmerlage ist die Änderung des Glimmschutz- Widerstandes deutlich geringer.

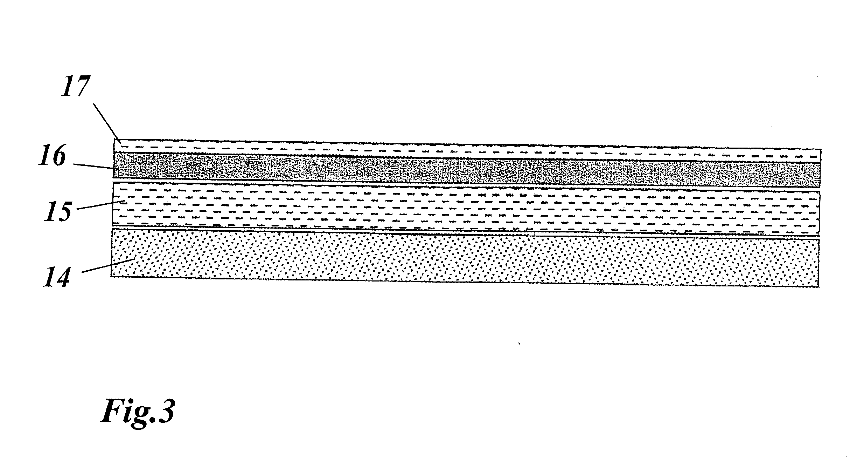

Ein Ausführungsbeispiel der erfindungsgemässen Lösung ist in Fig. 3 skizziert: Der Leiter 14 des Roebelstabes ist nach aussen zu von einer Hauptisolierung 15 umgeben, auf die ihrerseits ein Glimmschutz 16 aufgebracht ist. Auf den Glimmschutz 16 wird im gebogenen Teil des Roebelstabes als Decklage 17 noch eine Lage mit Glas-Glimmerband (wie es auch bei der Herstellung der Hauptisolierung 15 der Roebelstäbe Verwendung findet) aufgebracht. Dafür gibt es zwei Wege:

- Entweder wird die Decklage 17 bereits bei der Bewicklung des Stabes mit der Hauptisolierung 15 (welche ebenfalls aus Glas-Glimmerbändern besteht) und halbleitenden, SiC-gefüllten Glimmschutz-Bändern aufgewickelt. Die Decklage 17 (Glas-Glimmerband) wird dann gemeinsam mit der Hauptisolierung 15 und dem Glimmschutz 16 durch den üblichen Prozess der Imprägnierung und Aushärtung in Kunstharz (bevorzugt Epoxydharz) dauerhaft mit der Unterlage verklebt.

- Oder es gibt ein nachträgliches Aufwickeln und Verkleben des Glas-Glimmerbandes auf den Glimmschutzbelag (16) des Stabes, welcher bereits imprägniert und ausgehärtet ist. Dieses Verfahren umfasst 2 statt 1 Schritt, hat aber den Vorteil, dass ausser einem Glimmschutz 16 in Form von Bändern auch ein solcher in Form eines Lackes aufgebracht werden kann.

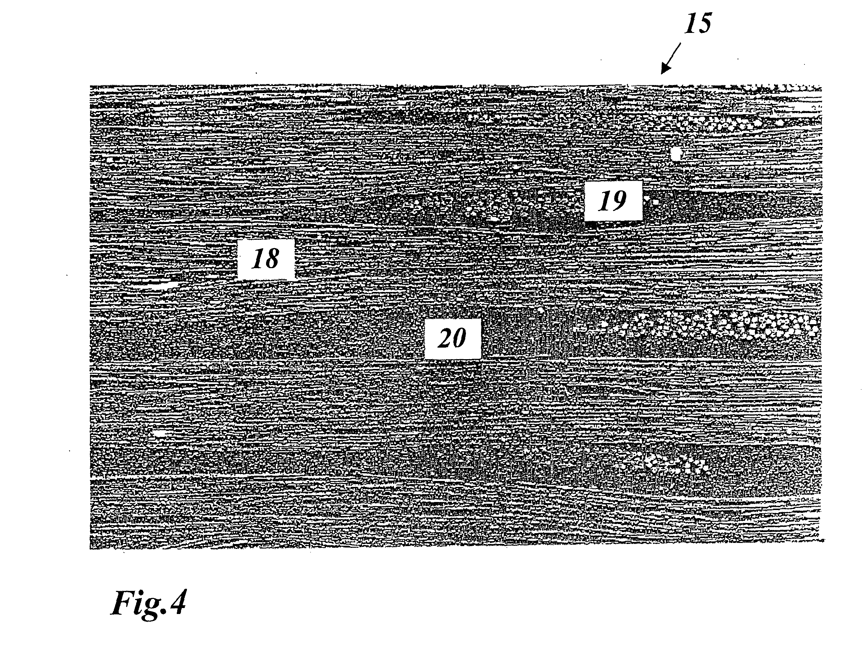

Glimmer ist ein schichtartig gebautes Silikatmineral mit einer thermischen Stabilität von über 1000°C. Als solches ist der reine Glimmer sehr resistent gegen eine Schädigung durch Glimmentladung, besonders wenn die Entladung senkrecht zu den Schichtebenen wirkt, wie dies beim Einsatz eines Glimmerbandes der Fall ist. Der Schichtaufbau bewirkt, dass einzelne Glimmerpartikel nicht in Form von Körnern von mehr oder weniger würfeliger Form vorkommen, sondern als dünne Plättchen. Im Glas-Glimmerband sind diese Plättchen parallel zur Bandebene orientiert. Das Glas liegt in Form eines sehr dünnen Glasseidegewebes vor, auf welches die Glimmerplättchen in vielen Lagen aufgebracht sind, wie dies am Beispiel der Hauptisolierung 15 in Fig. 4 erkennbar ist. Wegen des überwiegenden Mengenanteils an Glimmer (bis über 70%) im imprägnierten Band, und wegen seiner guten Ausrichtung senkrecht zur Richtung der Entladung hat das Band eine ähnlich gute Resistenz gegenüber Entladungen wie das reine Mineral.

Für den Nachweis der besseren Glimmbeständigkeit wurde eine erfindungsgemässe Anordnung mit zwei Anordnungen gemäss dem Stand der Technik verglichen. In jedem Fall bestand die Anordnung aus einem Kupferstab 600 x 50 x 15 mm, isoliert mit einer 2 mm dicken harzimprägnierten Glas-Glimmerisolierung. Die Anordnungen unterschieden sich wie folgt:

1. Anordnung nach Stand der Technik

Vor dem Imprägnieren wurde über die gesamte Länge des Stabes ein Endenglimmschutzband, gefüllt mit Siliziumcarbid-Partikeln und verfestigt mit Acrylharz auf das Glimmerband der Hauptisolierung gewickelt. Anschliessend wurde der gesamte Verbund mit reaktivem Epoxy/Polyester-Mischharz imprägniert und ausgehärtet.

## 2. Anordnung nach Stand der Technik

Der mit Glas-Glimmerband umwickelte Stab wurde ohne Glimmschutz imprägniert und ausgehärtet. Anschliessend wurde er mit einem Siliziumkarbid-haltigen Glimmschutzlack auf Epoxydharzbasis gestrichen.

## Anordnung nach der Erfindung

Wie die 1. Anordnung nach dem Stand der Technik, jedoch wurde auf den fertigen Stab noch eine Lage mit Epoxydharz-getränktem Glasglimmerband halbüberlappend aufgewickelt. Vor den thermisch-elektrischen Dauertests wurden alle 3 Stäbe bei 140°C für 72 h getempert.

## Versuchsaufbau + Durchführung

Für den thermisch-elektrischen Dauertest wurden die Stäbe waagerecht und isoliert in einen Umluftofen gelegt und an Hochspannung angeschlossen. Oberhalb jedes Stabe war eine Erdelektrode im Abstand von 15 mm montiert. Die Erdelektroden bestanden ebenfalls aus Kupferstäben und waren in gleicher Weise wie ihre gegenüberliegenden Pendants isoliert und mit Glimmschutz versehen. Im Gegensatz zu jenen waren sie jedoch an den Enden jeweils 100 mm hochgebogen, um einen Überschlag zwischen den blanken Metallenden der Stäbe zu verhindern.

Die Temperatur des Ofens betrug 180°C; die angelegte Spannung 20 kV Wechselstrom. Die Gesamtdauer des Versuches betrug 3770 h. Die Stäbe wurden in regelmässigen Abständen auf optische Veränderungen untersucht.

## Ergebnis für die 1. Anordnung nach Stand der Technik

Bereits nach 72 Stunden waren auf dem Stab die ersten weissen Stellen zu sehen, welche typisch sind für eine Schädigung durch Glimmerosion. Nach 220 h war der Belag des Leitbandes derart erodiert, dass stellenweise das Glasgewebe durchkam. Dieser Effekt nahm im Lauf der Zeit weiter zu. Nach 3770 h waren etwa 2/3 des Siliziumkarbidbelages verschwunden. Stellenweise kam bereits die erste Glimmerlage zum Vorschein. Der restliche Belag hatte nur noch sehr geringe Haftung zur Unterlage und liess sich leicht mit dem Finger wegwischen. Regelmässige Messungen des Gleichstrom-Widerstands zeigen, dass der Widerstand in den ersten 100h stark abnimmt - etwa um den Faktor 5 - und dann stabil bleibt. Dieses Verhalten kann durch Masseverlust des Binders erklärt werden. Wie alle organischen Materialien zersetzt sich Epoxydharz in Sauerstoff-Atmosphäre bei hohen Temperaturen langsam, aber unaufhaltsam. Das Endprodukt dieser Thermooxidation ist das Gas $CO_2$, welches entweicht. Dies bewirkt den oben erwähnten Masseverlust (Schrumpf) des Kunstharzbinders im Glimmschutzband, wodurch die elektrisch aktiven Füllkörner besseren Kontakt zueinander finden. So kann Masseverlust zu einer starken Abnahme des elektrischen Widerstandes des Glimmschutzbandes führen. Der Endzustand der Widerstandsabnahme ist erreicht, wenn die Siliziumkarbid-Körner ohne Einwirkung äusseren Drucks oder anderer Art der Verdichtung nicht mehr näher zueinander kommen können.

## Ergebnis für die 2. Anordnung nach dem Stand der Technik

Die Lackschicht sah rein optisch lange Zeit gut aus. Dass der optische Eindruck alleine nicht aussagekräftig ist, zeigte sich, wenn man an der Schicht rieb: Das Siliziumkarbid liess sich ab ca. 1600 h mühelos abreiben, da sämtliches Bindemittel aus dem Stab verschwunden war.

## Ergebnis für die Anordnung nach der Erfindung

Der Stab veränderte seine optische Erscheinung innerhalb 3770 h kaum. Nach stellenweiser Entfernung der Glimmerband-Deckschicht konnte die Leitbandschicht begutachtet werden: Sie war optisch ohne Unterschied zu einer Leitbandschicht im Neuzustand und war abreibfest.

Eine Messung der Gleichstrom-Widerstandscharakteristik bei Versuchsende zeigte, dass der Widerstandwert demjenigen einer Neuwicklung entspricht. Offensichtlich bewirkt die Glimmerdecklage nicht nur einen sehr guten Schutz des Glimmschutzes gegen Glimmerosion, sondern wirkt auch als sehr effiziente Sauerstoffbarriere, wodurch der Effekt der Thermooxidation deutlich gemildert wird.

Natürlich können statt Glas-Glimmerbändern auch Glimmerbänder mit einem Träger aus Kunststoff (Kunststoff-Glimmerbänder) verwendet werden.

## BEZUGSZEICHENLISTE

| | |
|---|---|
| 10 | Statorwicklung |
| 11 | Wicklungsstab (Roebelstab) |
| 12 | Nutteil |
| 13 | Wickelkopfteil |
| 13' | Wickelkopfraum |
| 14 | Leiter (Cu) |
| 15 | Hauptisolierung |
| 16 | Glimmschutz |
| 17 | Decklage (Glas-Glimmerband) |
| 18 | Glimmerlage |
| 19 | Glaslage |
| 20 | Epoxydharz |
| A,B,C | Punkt |
| $d_0, d_1$ | Abstand |
| $\alpha$ | Biegewinkel |

**Patentansprüche**

1. Statorwicklung einer rotierenden elektrischen Maschine, insbesondere mit Betriebsspannungen oberhalb 6 kV, welche Statorwicklung mit Formspulen oder Stabwicklungen ausgestattet ist, wobei die einzelnen Leiter der Formspulen bzw. Stabwicklungen im Bereich des Statorkörpers in Nuten eingelegt und ausserhalb des Statorkörpers in einem Wickelkopfbereich miteinander verbunden sind, und wobei die Leiter (14) von einer Hauptisolierung (15) und einem darüberliegenden Glimmschutz (16) umgeben sind, **dadurch gekennzeichnet, dass** bei den Leitern (14) im Wickelkopfbereich zusätzliche Mittel zur Verbesserung der Glimmbeständigkeit vorgesehen sind.

2. Statorwicklung nach Anspruch 1, **dadurch gekennzeichnet, dass** die zusätzlichen Mittel zur Verbesserung der Glimmbeständigkeit eine zusätzliche Decklage (17) umfassen, welche auf den Glimmschutz (16) aussen aufgebracht ist.

3. Statorwicklung nach Anspruch 2, **dadurch gekennzeichnet, dass** die Decklage (17) ein mit einem Epoxydharz imprägniertes Glimmerband mit einem Träger aus Glas oder Kunststoff umfasst, und dass der Leiter (14) mit dem Glimmerband halb-überlappend umwickelt ist.

4. Statorwicklung nach Anspruch 3, **dadurch gekennzeichnet, dass** das Glimmerband der Decklage (17) ein Glasseidegewebe umfasst, auf das dünne Glimmerplättchen in einer Vielzahl von Lagen aufgebracht sind, wobei die Plättchen parallel zur Bandebene orientiert sind.

5. Statorwicklung nach Anspruch 4, **dadurch gekennzeichnet, dass** der Mengenanteil an Glimmer im imprägnierten Glimmerband überwiegt, insbesondere grösser 70% ist.

6. Verfahren zur Herstellung einer Statorwicklung nach einem der Ansprüche 1 bis 5, **dadurch gekennzeichnet, dass** die zusätzlichen Mittel zur Verbesserung der Glimmbeständigkeit bzw. die Decklage (17) bereits bei Bewicklung des Leiters (14) mit der Hauptisolierung (15) und dem Glimmschutz (16) aufgebracht werden, und dass alle Schichten gemeinsam mit dem Leiter (14) dauerhaft verbunden werden.

7. Verfahren nach Anspruch 6, **dadurch gekennzeichnet, dass** die zusätzlichen Mittel zur Verbesserung der Glimmbeständigkeit bzw. die Decklage (17) ein Glimmerband mit einem Träger aus Glas oder Kunststoff umfassen, und dass das aufgebrachte Glimmerband gemeinsam mit Hauptisolierung (15) und Glimmschutz (16) durch eine Imprägnierung mit einem Kunstharz, insbesondere Epoxydharz, und einer anschliessenden Aushärtung des Harzes mit der Unterlage dauerhaft verbunden wird.

8. Verfahren zur Herstellung einer Statorwicklung nach einem der Ansprüche 1 bis 5, **dadurch gekennzeichnet, dass** zunächst der Leiter (14) dauerhaft mit der Hauptisolierung (15) und dem Glimmschutz (16) versehen wird, und dass dann die zusätzlichen Mittel zur Verbesserung der Glimmbeständigkeit bzw. die Decklage (17) aufgebracht und mit dem Leiter (14) dauerhaft verbunden wird.

9. Verfahren nach Anspruch 8, **dadurch gekennzeichnet, dass** die zusätzlichen Mittel zur Verbesserung der Glimmbeständigkeit bzw. die Decklage (17) ein Glimmerband mit einem Träger aus Glas oder Kunststoff umfassen, und dass das Glimmerband nach Imprägnierung und Aushärtung des Glimmschutzes (16) über den Glimmschutz (16) gewickelt und anschliessend verklebt wird.

Fig.1

Fig.2

*Fig.3*

*Fig.4*

EP 1 811 633 A1

**Europäisches Patentamt**

**EUROPÄISCHER RECHERCHENBERICHT**

Nummer der Anmeldung

EP 07 10 0656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 196 34 578 A1 (VEM-ELEKTROANTRIEBE GMBH, 01259 DRESDEN, DE) 12. März 1998 (1998-03-12) * das ganze Dokument * ----- | 1-9 | INV. H02K3/40 |
| A | DE 297 12 347 U1 (VEM-ELEKTROANTRIEBE GMBH, 01259 DRESDEN, DE) 4. Dezember 1997 (1997-12-04) * das ganze Dokument * ----- | 1-9 | |
| A | EP 0 978 926 A (MITSUBISHI DENKI KABUSHIKI KAISHA) 9. Februar 2000 (2000-02-09) * Zusammenfassung; Abbildung 2 * ----- | 1-9 | |
| A | PATENT ABSTRACTS OF JAPAN Bd. 008, Nr. 013 (E-222), 20. Januar 1984 (1984-01-20) & JP 58 175944 A (MITSUBISHI DENKI KK), 15. Oktober 1983 (1983-10-15) * Zusammenfassung; Abbildungen * ----- | 1-9 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 19. April 2007 | Ramos, Horacio |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 10 0656

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2007

| Im Recherchenbericht angeführtes Patentdokument | Datum der Veröffentlichung | Mitglied(er) der Patentfamilie | | Datum der Veröffentlichung |
|---|---|---|---|---|
| DE 19634578 A1 | 12-03-1998 | KEINE | | |
| DE 29712347 U1 | 04-12-1997 | KEINE | | |
| EP 0978926 A | 09-02-2000 | WO | 9931782 A1 | 24-06-1999 |
| | | JP | 3745383 B2 | 15-02-2006 |
| | | US | 6130496 A | 10-10-2000 |
| JP 58175944 A | 15-10-1983 | KEINE | | |

EPO FORM P0461

Für nähere Einzelheiten zu diesem Anhang : siehe Amtsblatt des Europäischen Patentamts, Nr.12/82